# EUROPEAN PATENT SPECIFICATION

(11) **EP 3 759 890 B1**
(45) Date of publication and mention of the grant of the patent: **13.09.2023**
(21) Application number: 19706429.8
(22) Date of filing: 13.02.2019
(51) Int. Cl.: H04L 67/12, H04W 4/80, A24F 40/53, A24F 40/65, H04L 9/40, H04W 12/72

(54) **SYSTEM FOR MANAGING SMOKING SUBSTITUTE DEVICES AND ASSOCIATED METHOD**
SYSTEM UND VERFAHREN ZUR VERWALTUNG VON RAUCHERSATZGERÄTEN UND ZUGEHÖRIGES VERFAHREN
SYSTÈME DE GESTION DE DISPOSITIFS DE SUBSTITUTS À FUMER ET PROCÉDÉ ASSOCIÉS

(30) Priority: 26.02.2018 GB 201803026; 25.05.2018 GB 201808611; 20.09.2018 GB 201815356
(43) Date of publication of application: 06.01.2021
(73) Proprietor: Imperial Tobacco Limited, Bristol, BS3 2LL (GB)
(72) Inventor: FARD, Daniel, Liverpool Merseyside L24 9HP (GB); TALBOT, Oliver, Liverpool Merseyside L24 9HP (GB)
(74) Representative: Mewburn Ellis LLP
(86) International application number: PCT/EP2019/053510
(87) International publication number: WO 2019/162161

(56) References cited:
- EP-A2- 3 000 245
- WO-A1-2016/199066
- WO-A1-2018/024154
- US-A1- 2013 306 084
- US-A1- 2018 020 720
- US-A1- 2018 043 114

## Description

This application claims priority from GB1803026.2 filed 26 February 2018, GB1808611.6 filed 25 May 2018, and GB1815356.9 filed 20 September 2018.

### Field of the Invention

The present invention relates to systems for managing smoking substitute devices and associated methods.

### Background

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol, also referred to as a "vapour", that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu^{™} e-cigarette. The myblu^{™} e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO^{™} e-cigarette. The blu PRO^{™} e-cigarette is an open system device which includes a main body, a (refillable) tank, and a mouthpiece. The main body and tank are physically and electrically coupled together by screwing one to the other. The mouthpiece and refillable tank are physically coupled together by screwing one of the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute device is the so-called "heat not burn" ("HNB") approach in which tobacco (rather than e-liquid) is heated or warmed to release vapour. The tobacco may be leaf tobacco or reconstituted tobacco. The vapour may contain nicotine and/or flavourings. In the HNB approach the intention is that the tobacco is heated but not burned, i.e. does not undergo combustion.

A typical HNB smoking substitute device may include a main body and a consumable. The consumable may include the tobacco material. The main body and consumable may be configured to be physically coupled together. In use, heat may be imparted to the tobacco material by a heating device that is typically located in the main body, wherein airflow through the tobacco material causes moisture in the tobacco material to be released as vapour. A vapour may be formed from a carrier in the tobacco material (this carrier may for example include propylene glycol and/or vegetable glycerin) and additionally volatile compounds released from the tobacco. The released vapour may be entrained in the airflow drawn through the tobacco.

As the vapour passes through the smoking substitute device (entrained in the airflow) from an inlet to a mouthpiece (outlet), the vapour cools and condenses to form an aerosol (also referred to as a vapour) for inhalation by the user. The aerosol will normally contain the volatile compounds.

In HNB smoking substitute devices, heating as opposed to burning the tobacco material is believed to cause fewer, or smaller quantities, of the more harmful compounds ordinarily produced during smoking. Consequently, the HNB approach may reduce the odour and/or health risks that can arise through the burning, combustion and pyrolytic degradation of tobacco.

An example of the HNB approach is the IQOS^{™} smoking substitute device from Philip Morris Ltd. The IQOS^{™} smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HNB approach is the device known as "Glo"^{™} from British American Tobacco p.l.c. Glo^{™} comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have observed that a smoking substitute device can become lost or stolen, and in such circumstances may fall into the hands of a person that should not be using the device, e.g. a thief or a child.

The present inventor(s) have observed that consumable material that is typically present in a smoking substitute device can degrade. This can cause a loss of taste. In the case of e-liquid, degradation of the e-liquid may cause components of the smoking substitute device to degrade, e.g. one or more components of a consumable in which the e-liquid is stored.

The present invention has been devised in light of the above considerations. WO 2018/024154 A1 relates to a monitoring system for electronic cigarettes. US 2018/020720 A1 relates to operating an electronic cigarette.

### Summary of the Invention

The invention is defined by the independent claims. Advantageous embodiments are set out in the dependent claims.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
Figure 2(c) shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4(a)** shows an example of validity state information associated with a plurality of consumables that could be stored at the application server in the system of Fig. 1.
**Figure 4(b)** shows an example of validity state information associated with a plurality of smoking substitute devices that could be stored at the application server in the system of Fig. 1.
**Figure 4(c)** shows another example of validity state information associated with a plurality of smoking substitute devices that could be stored at the application server in the system of Fig. 1.
**Figure 5(a)** shows an example method that could be performed by the system of Fig. 1, using the validity state information of Fig 4(a).
**Figure 5(b)** shows an example method that could be performed by the system of Fig. 1, using the validity state information of Fig 4(b).

### Detailed Description of the Invention

Aspects and embodiments of the present invention will now be discussed with reference to the accompanying figures. Further aspects and embodiments will be apparent to those skilled in the art.

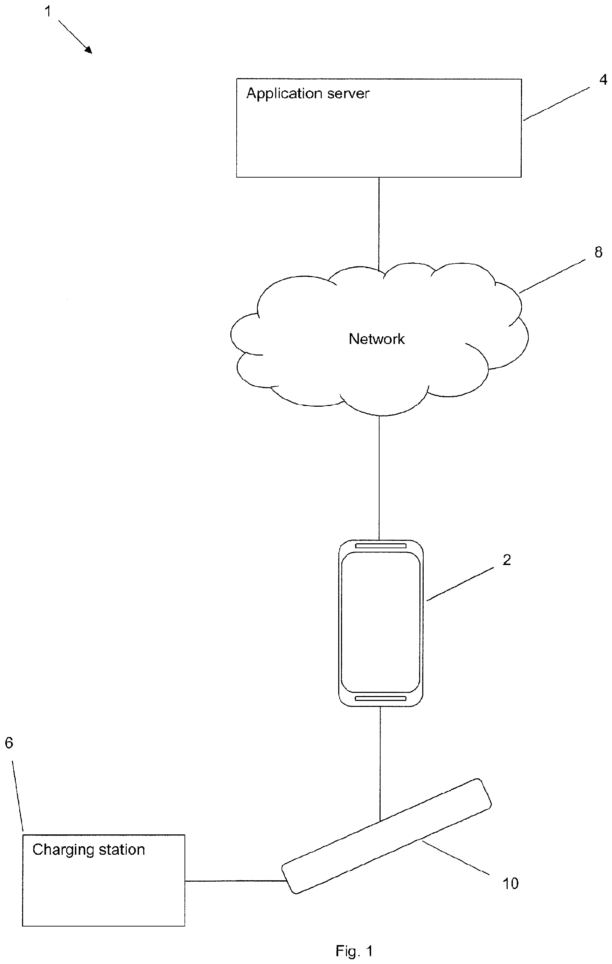

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth^{™}, with an application (or "app") installed on the mobile device 2, e.g. via a suitable wireless interface (not shown) on the mobile device 2. The wireless connection between the smoking substitute device 10 and the mobile device may be occasional, or intermittent. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

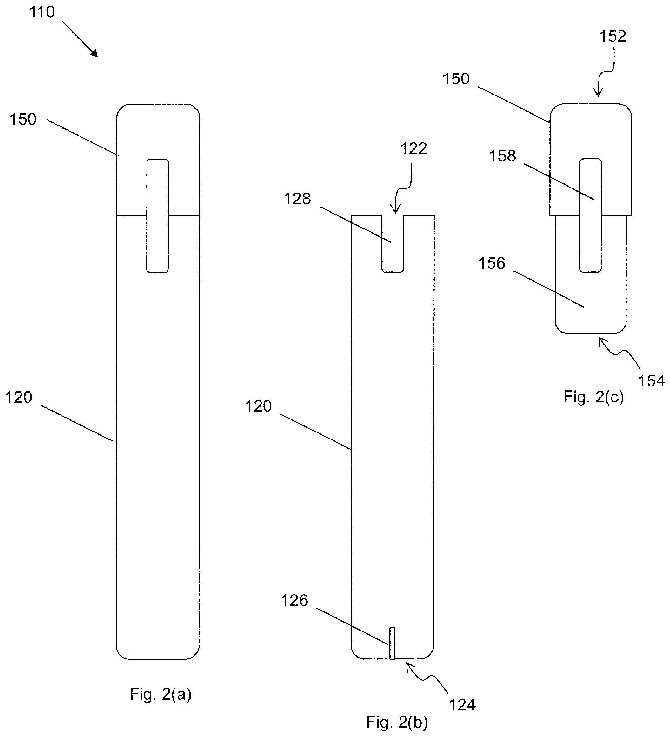

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120. In other examples, the main body 120 and the consumable could be physically coupled together by screwing one onto the other, or through a bayonet fitting, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

The tank 156 may be referred to as a "clearomizer" if it includes a window 158, or a "cartomizer" if it does not.

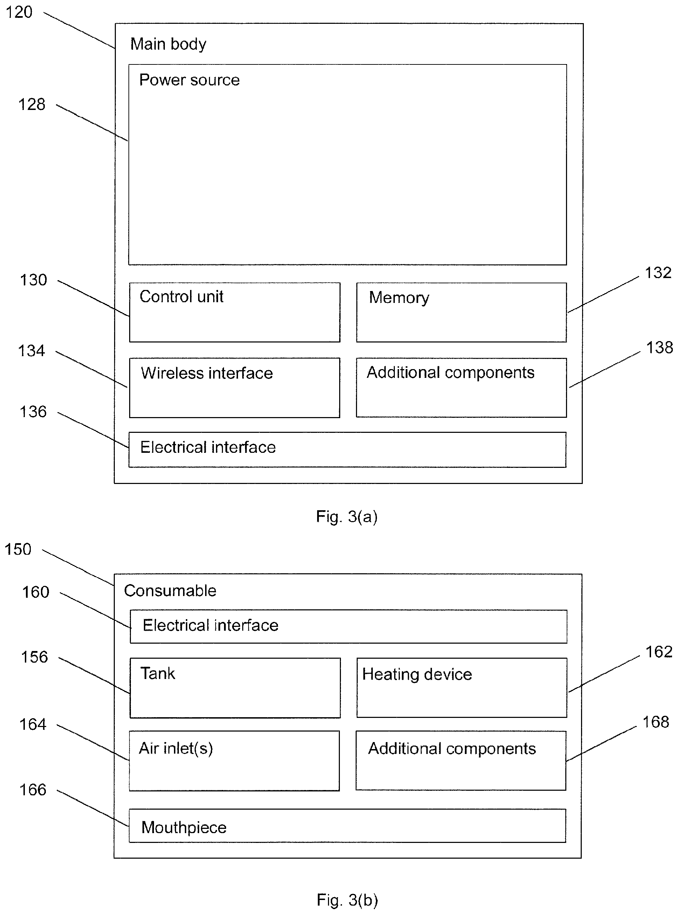

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth^{™} antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include an RFID reader. The RFID reader could be configured to read an RFID tag on the consumable 150 when (preferably only when) the consumable 150 is physically coupled to the main body.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include an identifier in the form of a machine readable tag which stores ID information identifying the consumable. The machine readable tag may be an RFID tag, for example.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

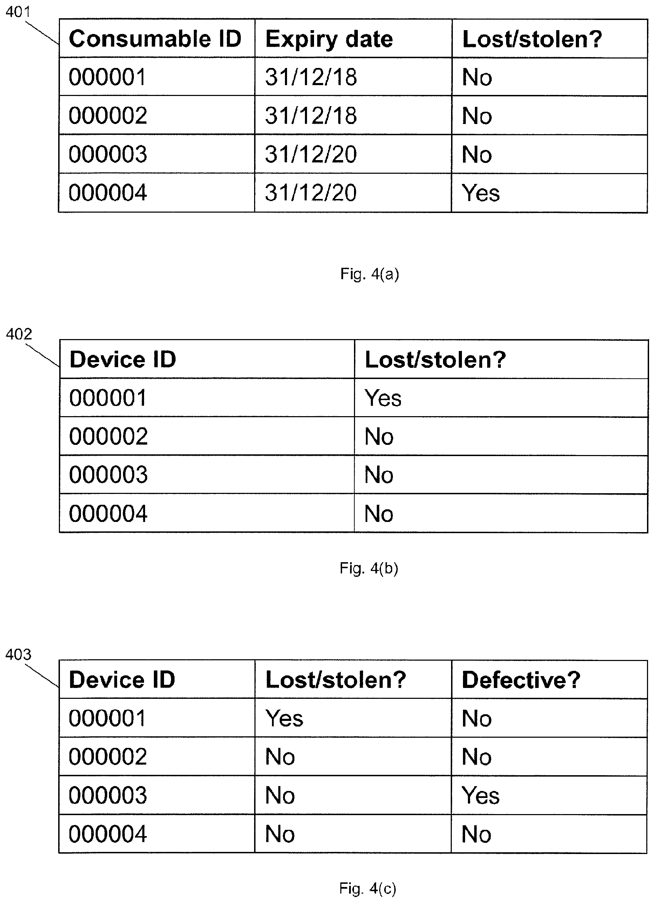

Fig. 4(a) shows an example of validity state information associated with a plurality of consumables 150 that could be stored at the application server 4.

In this example, the validity state information associated with a plurality of consumables 150 is stored at the application server 4 in the form of a table 401.

In table 401, the validity state information associated with each consumable 150 is stored in the same row as ID information identifying that consumable, thereby storing the validity state information associated with each consumable 150 in association with ID information identifying that consumable 150. Each item of ID information could uniquely identify a respective consumable 150 of the plurality of consumables, or could uniquely identify a respective batch of consumables that includes a plurality of consumables 150, for example.

In table 401, the validity state information associated with each consumable 150 includes an expiry date for the consumable as well as a lost/stolen flag (which functions as an invalidity flag as described above).

If the expiry date is found to have elapsed for a given consumable, a determination may be made that the consumable 150 is not valid for use.

If the lost/stolen flag for a given consumable 150 indicates that the consumable 150 is lost/stolen (shown as "yes" in table 401, corresponding to an 'invalid' state as described above), a determination may be made that the consumable 150 is not valid for use (as is the case for Consumable ID 000004 in table 401), and the system may inhibit use of the consumable with the main body, e.g. by disabling the main body 120 such that it does not work with the consumable 150.

If the lost/stolen flag for a given consumable 150 indicates that the consumable 150 is not lost/stolen (shown as "no" in table 401, corresponding to a 'valid' state as described above), a determination may be made that the consumable 150 is valid for use (as is the case for Consumable IDs 000001-000003 in table 401).

Fig. 4(b) shows an example of validity state information associated with a plurality of smoking substitute devices 110 that could be stored at the application server 4.

In this example, the validity state information associated with a plurality of substitute smoking devices 110 is stored at the application server 4 in the form of a table 402.

In table 402, the validity state information associated with each substitute smoking device 110 is stored in the same row as ID information identifying that substitute smoking device 110, thereby storing the validity state information associated with each substitute smoking device 110 in association with ID information identifying that substitute smoking device 110. In this example, each item of ID information uniquely identifies a respective main body 120 of a respective substitute smoking device 110 (since different consumables 150 may be used with a single main body 120).

In table 402, the validity state information associated with each substitute smoking device 110 includes a lost/stolen flag (which functions as an invalidity flag as described above).

If the lost/stolen flag for a given smoking substitute device 110 indicates that the smoking substitute device 110 is lost/stolen (shown as "yes" in table 402), a determination may be made that the smoking substitute device 110 is not valid for use (as is the case for Device ID 000001 in table 402), and the smoking substitute device may be disabled.

If the lost/stolen flag for a given smoking substitute device 110 indicates that the smoking substitute device 110 is not lost/stolen (shown as "no" in table 401), a determination may be made that the smoking substitute device 110 is valid for use (as is the case for Device IDs 000002-000004 in table 402).

Fig. 4(c) shows another example of validity state information associated with a plurality of smoking substitute devices 110 that could be stored at the application server 4.

In this example, the validity state information associated with a plurality of substitute smoking devices 110 is stored at the application server 4 in the form of a table 403.

Table 403 is the same as table 402, but the validity state information associated with each substitute smoking device 110 includes a defective flag (which functions as an invalidity flag as described above), in addition to the lost/stolen flag.

If the defective flag for a given smoking substitute device 110 indicates that the smoking substitute device 110 is defective (shown as "yes" in table 403), a determination may be made that the smoking substitute device 110 is not valid for use (as is the case for Device ID 000003 in table 403), and the smoking substitute device may be disabled permanently.

If the lost/stolen flag for a given smoking substitute device 110 indicates that the smoking substitute device 110 is lost/stolen (shown as "yes" in table 403) whilst the defective flag indicates that the smoking substitute device 110 is not defective (shown as a "no" in table 403), a determination may be made that the smoking substitute device 110 is not valid for use (as is the case for Device ID 000001 in table 403), and the smoking substitute device may be disabled non-permanently.

If the lost/stolen flag and defective flag for a given smoking substitute device 110 indicate that the smoking substitute device 110 is not lost/stolen and is not defective (both shown as "no" in table 403), a determination may be made that the smoking substitute device 110 is valid for use (as is the case for Device IDs 000002 and 000004 in table 403).

It can be seen from the above discussion that having the defective flag as a "yes" for a given smoking substitute device corresponds to a first invalid state as discussed above (indicating that the smoking substitute device is invalid and should be disabled permanently).

It can also be seen from the above discussion that having the defective flag as a "no" and the lost/stolen flag as a "yes" for a given smoking substitute device corresponds to a second invalid state as discussed above (indicating that the smoking substitute device is invalid and should be disabled non-permanently).

It can also be seen from the above discussion that having the defective flag as a "no" and the lost/stolen flag as a "no" for a given smoking substitute device corresponds to a valid state as discussed above (indicating that the smoking substitute device is valid for use).

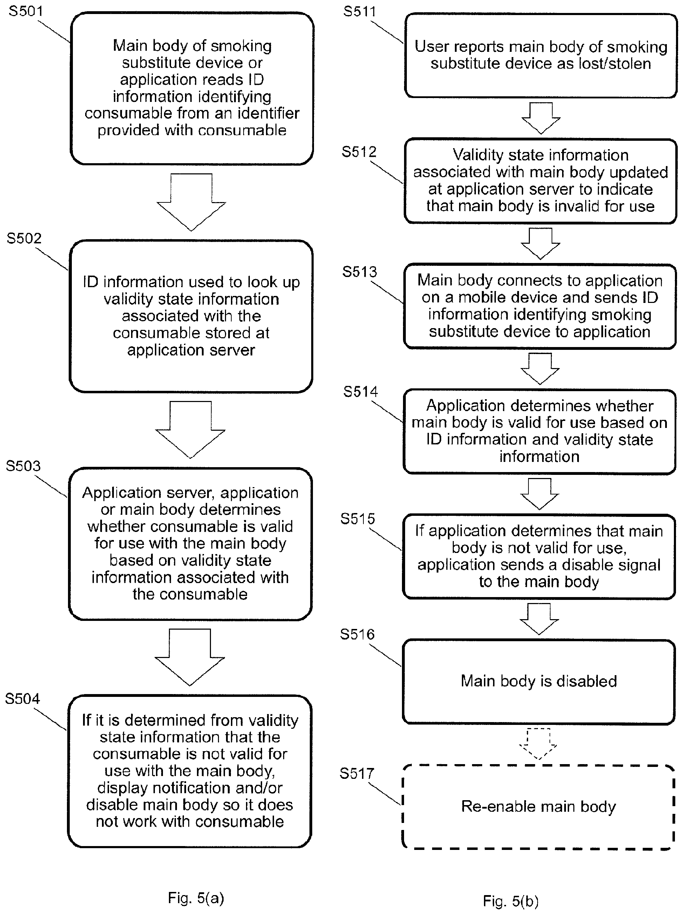

Fig. 5(a) shows an example method that could be performed by the system 1, using the validity state information of Fig 4(a).

In step S501, the main body 120 of smoking substitute device or the application installed on mobile device 2 reads ID information identifying the consumable 150 from a machine readable tag provided with the consumable 150.

For example, the main body 120 could include an RFID reader configured to read ID information identifying the consumable 150 from an RFID tag included in the consumable 150 when (preferably only when) the main body 120 is physically coupled to the consumable 150. The main body 120 may be configured to wirelessly communicate this ID information to the application on the mobile device.

As another example, the application on the mobile device 2 may prompt a user to present a consumable to a component of the system 1 (e.g. to the main body 120 or the mobile device 2) so that that component of the system 1 can read ID information identifying the consumable 150 from an identifier provided with the consumable (e.g. in a manner as described above), before the user physically couples the consumable 150 to the main body 120 or whilst the consumable 150 is physically coupled to the main body 120.

In step S502, the ID information identifying the consumable 150 is used (e.g. by the application or application server 4) to look up the validity state information associated with the consumable 150 in the table 401 (e.g. in a manner as described above), and in step S503 this validity state information is then used (e.g. by the application server 4, application or main body 120, e.g. in a manner as described above) to determine whether the consumable 150 is valid for use with the main body 120.

In step S504, if it is determined from the validity state information associated with the consumable 150 that the consumable 150 is not valid for use with the main body 120, then use of the consumable 150 with the main body 120 is inhibited, for example by:
- a notification informing a user that the consumable 150 is not valid for use with the main body 120 being displayed (e.g. by the light 126 on the main body 120 being operated according to a predetermined sequence and/or a notification being displayed by the application on the mobile device); and/or
- the main body 120 being disabled such that it does not work with the consumable 150 (e.g. by configuring the main body 120 to not pass electrical power to the heating device 162 of the consumable 150 when the consumable 150 is physically coupled to the main body 120)

For example, if the expiry date associated with the consumable 150 has elapsed, or the lost/stolen flag associated with the consumable 150 indicates that the consumable 150 has been lost/stolen (as is the case for Consumable ID 000004 in table 401), then it may be determined that the consumable 150 is not valid for use with the main body 120. If an expiry date associated with the consumable 150 has elapsed, and a lost/stolen flag associated with the consumable 150 indicates that the consumable 150 has not been lost/stolen, then it may be determined that the consumable 150 is valid for use with the main body 120.

A user may provided with an option to override the notification and/or disabling of the main body 120, e.g. via the application, so that they can continue using the main body 120, even though they have been inhibited by doing so through the above steps.

Fig. 5(b) shows an example method that could be performed by the system 1, using the validity state information of Fig 4(b).

In step S511, a user reports a main body 120 of a smoking substitute device 110 as lost/stolen, e.g. via the application or through a customer support helpline.

In step S512, validity state information associated with the main body 120 is changed at application server to indicate that main body 120 is invalid for use, e.g. by setting the lost/stolen flag associated with the main body 120 to indicate that the main body 120 has been lost/stolen (as is the case for Device ID 000001 in table 402).

A local copy of the validity state information stored at the application server 4 may be stored by the application and/or the smoking substitute device 110 (e.g. in the memory 132 of the smoking substitute device). The/each local copy may be updated periodically by the application server.

In step S513, the main body 120 connects to the application on the mobile device 2 and sends ID information, e.g. an ID number uniquely identifying the main body 120, to the application wirelessly, via the wireless interface 134, via the wireless interface 134 included in the main body.

In step S514, the application and/or the application server 4 determines whether the main body 120 is valid for use based on the ID information and the validity state information associated with the main body 120. The determination by the application and/or the application server 4 of whether the main body 120 is valid for use may, for example, include the application using the ID information sent to it by the smoking substitute device 110 and a local copy of the validity state information to determine whether a lost/stolen flag and/or a defective flag (see Fig. 4(c)) associated with the main body 120 indicate that the main body 120 is valid or invalid for use. Alternatively, this determination may include the application sending the ID information to the application server 4 so that the application server 4 can check whether a lost/stolen flag and/or a defective flag (see Fig. 4(c)) associated with the main body 120 indicates that the main body 120 is valid or invalid for use.

As an alternative, the main body 120 may determine whether it is valid for use by using its ID information and a local copy of the validity state information (e.g. which may recently have been updated by the application server 4) to determine whether a lost/stolen flag and/or a defective flag (see Fig. 4(c)) associated with the main body 120 indicates that the main body 120 is valid or invalid for use.

In step S515, if the application and/or the application server 4 determines that main body 120 is not valid for use (e.g. because the validity state information associated with the main body 120 indicates that the main body 120 has been lost/stolen, as is the case for Device ID 000001 in table 402 or is defective as is the case for Device ID 000003 in table 403), the application and/or application server 4 may issue a disable signal. This disable signal could be sent to the main body 120, which may be received at the main body via the wireless interface 134 included in the main body.

As noted above, if a defective flag (see Fig. 4(c)) associated with the main body 120 indicates that the main body 120 is invalid for use, the disable signal may be configured to disable the smoking substitute device permanently. Whereas if only a lost/stolen flag indicates that the main body 120 is invalid for use, the disable signal may be configured to disable the smoking substitute device non-permanently.

In step S516, the main body 120 is disabled on receipt of this disable signal, e.g. by the main body 120 being instructed by the signal to configure itself to not activate (e.g. not pass electrical power to the heating device 162).

Step S517 is an optional step that may be present if the disable signal was configured to disable the smoking substitute device non-permanently (see above), In this case, the smoking substitute device 110, application and/or application server 4 may issue a re-enable signal configured to re-enable the smoking substitute device 110 if one or more re-enablement criteria are met, e.g. the application may issue a re-enable signal if a user passes a verification process at the application.

In a further method (not illustrated) which builds on the method of Fig. 5(b), there may be one or more further main bodies 120 configured to be wirelessly connected to the main body 120. For example, the main body 120 may connect to a first further main body 120, wherein the main body 120 connects to the mobile device 2 on which the application is installed. Multiple main bodies 120 could be chained together in this way, or form a mesh network.

The application server 4 may store validity state information associated with the/each further main body 120 (a local copy of this validity state information may also be stored at the application and/or main body 120).

The/each main body 120 may store ID information identifying the further main body 120.

For the/each further main body 120, the main body 120, application and/or application server 4 may be configured to determine whether the further main body 120 is valid for use based on the ID information identifying the further main body 120 and the validity state information associated with the further main body 120 and, if the main body 120, application and/or application server 4 determines that the further main body 120 is not valid for use, issue a disable signal configured to disable the further main body 120. This further method may allow for a main body 120 to be disabled, even if it is not connected (directly) to a mobile device 2.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS^{™} smoking substitute device discussed above.

As another example, for the method of Fig. 5(b), an open system vaping device which includes a main body, a refillable tank, and a mouthpiece could be used as the smoking substitute device 10 of Fig. 1, instead of the main body 120 of the smoking substitute device 110. One such open system vaping device is the blu PRO^{™} e-cigarette discussed above.

As another example, for the method of Fig. 5(b), an entirely disposable (one use) smoking substitute device could be used as the smoking substitute device 10 of Fig. 1, instead of the main body 120 of the smoking substitute device 110.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention which is defined by the appended claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system for managing a smoking substitute device (10, 110) including:
a first smoking substitute device (10, 110);
a mobile device (2) on which an application is installed, wherein the first smoking substitute device (10, 110) is configured to communicate with the application;
the system includes an application server (4), wherein the mobile device (2) is configured to communicate with the application server (4), and wherein the application server (4) is configured to store validity state information associated with the first smoking substitute device (10, 110) from which it can be determined, using ID information identifying the first smoking substitute device, whether the first smoking substitute device (10, 110) is valid for use;
wherein the first smoking substitute device (10, 110) is configured to store ID information identifying the first smoking substitute device (10, 110);
wherein the first smoking substitute device (10, 110), application and application server (4) are configured to:
determine (S503, S514) whether the first smoking substitute device (10, 110) is valid for use based on the ID information identifying the first smoking substitute device (10, 110) and the validity state information associated with the first smoking substitute device (10, 110); and
if the first smoking substitute device (10, 110) is determined to not be valid for use, issue a disable signal (S504, S515) configured to disable the first smoking substitute device (10, 110);
wherein the disable signal is configured to disable the first smoking substitute device (10, 110) non-permanently, if the validity state information associated with the first smoking substitute device (10, 110) indicates that the smoking substitute device is invalid and should be disabled non-permanently;
wherein the disable signal is configured to disable the first smoking substitute device (10, 110) permanently, if the validity state information associated with the first smoking substitute device (10, 110) indicates that the first smoking substitute device is invalid and should be disabled permanently.

2. A system according to claim 1, wherein the validity state information associated with the first smoking substitute device (10, 110) includes one or more invalidity flags configured to have a valid state, a first invalid state indicating that the first smoking substitute device is invalid and should be disabled permanently, and a second invalid state indicating that the first smoking substitute device is invalid and should be disabled non-permanently, and wherein the determination (S503, S514) of whether the first smoking substitute device (10, 110) is valid for use includes using the ID information to check whether the one or more invalidity flags associated with the first smoking substitute device (10, 110) indicate that the first smoking substitute device (10, 110) is valid, invalid and should be disabled permanently, or invalid and should be disabled non-permanently.

3. A system according to claim 1 or 2, wherein the validity state information associated with the first smoking substitute device (10, 110) is associated with the first smoking substitute device (10, 110) by being stored in association with the ID information identifying the first smoking substitute device (10, 110).

4. A system according to any previous claim, wherein if the disable signal is configured to disable the first smoking substitute device (10, 110) non-permanently, the first smoking substitute device (10, 110), application and/or application server (4) is configured to issue a re-enable signal configured to re-enable (S517) the first smoking substitute device (10, 110) if one or more re-enablement criteria are met.

5. A system according to claim 4, wherein the one or more re-enablement criteria include a user passing a verification process at the application.

6. A system according to claim 4 or 5, wherein the one or more re-enablement criteria include the validity state information associated with the first smoking substitute device at the application server (4) being changed to indicate that the first smoking substitute device (10, 110) is valid for use.

7. A system according to any previous claim, wherein permanently disabling the first smoking substitute device involves disabling the first smoking substitute device such that a user of the first smoking substitute device is not permitted to re-enable the first smoking substitute device, even if the user causes one or more re-enablement criteria to be met.

8. A system according to any previous claim, wherein the first smoking substitute device (10, 110) is configured to communicate wirelessly with the application via a communication channel (8) established directly between the first smoking substitute device (10, 110) and the mobile device (2) on which the application is installed.

9. A system according to any previous claim, wherein:
the system includes one or more further smoking substitute devices (10, 110) configured to be wirelessly connected to the first smoking substitute device (10, 110);
the application server (4) is configured to store validity state information associated with the/each further smoking substitute device (10, 110);
the/each further smoking substitute devices (10, 110) is/are configured to store ID information identifying the further smoking substitute device (10, 110);
for the/each further smoking substitute device (10, 110), the first smoking substitute device (10, 110), application and application server (4) are configured to determine (S503, S514) whether the further smoking substitute device (10, 110) is valid for use and based on the ID information identifying the further smoking substitute device (10, 110) and the validity state information associated with the further smoking substitute device (10, 110); and
if the further smoking substitute device (10, 110) is determined to not be valid for use, issue a disable signal (S504, S515) configured to disable the further smoking substitute device (10, 110).

10. A system according to claim 9, wherein the/each further smoking substitute device is/are configured to send ID information to the first smoking substitute device, wherein the first smoking substitute device (10,110), application and application server (4) are configured to determine the validity of the/each further smoking substitute device using the ID information sent to the first smoking substitute device by the/each further smoking substitute device.

11. A method performed by a system for managing a smoking substitute device (10, 110), wherein the system includes:
a first smoking substitute device (10, 110);
a mobile device (2) on which an application is installed, wherein the first smoking substitute device (10, 110) is configured to communicate with the application;
an application server (4), wherein the mobile device (2) is configured to communicate with the application server (4), and wherein the application server (4) is configured to store validity state information associated with the first smoking substitute device (10, 110) from which it can be determined whether the first smoking substitute device (10, 110) is valid for use;
wherein the first smoking substitute device (10, 110) is configured to store ID information identifying the first smoking substitute device (10, 110);
wherein the method includes:
the first smoking substitute device (10, 110), application and application server (4) determining (S504, S514) whether the first smoking substitute device (10, 110) is valid for use based on the ID information identifying the first smoking substitute device (10, 110) and the validity state information associated with the first smoking substitute device (10, 110); and
if the first smoking substitute device (10, 110) is determined to not be valid for use, issuing a disable signal (S504, S515) configured to disable the first smoking substitute device (10, 110);
wherein the disable signal disables the first smoking substitute device (10, 110) non-permanently, if the validity state information associated with the first smoking substitute device (10, 110) indicates that the smoking substitute device is invalid and should be disabled non-permanently;
wherein the disable signal disables the first smoking substitute device (10, 110) permanently, if the validity state information associated with the first smoking substitute device (10, 110) indicates that the first smoking substitute device is invalid and should be disabled permanently.

## Patentansprüche

1. System zum Verwalten einer Rauchersatzvorrichtung (10, 110), das Folgendes umfasst:
eine erste Rauchersatzvorrichtung (10, 110);
eine Mobilvorrichtung (2), auf der eine Anwendung installiert ist, wobei die erste Rauchersatzvorrichtung (10, 110) dazu ausgelegt ist, mit der Anwendung zu kommunizieren;
wobei das System einen Anwendungsserver (4) umfasst, wobei die Mobilvorrichtung (2) dazu ausgelegt ist, mit dem Anwendungsserver (4) zu kommunizieren, und wobei der Anwendungsserver (4) dazu ausgelegt ist, der ersten Rauchersatzvorrichtung (10, 110) zugeordnete Gültigkeitsstatusinformationen zu speichern, anhand derer unter Verwendung von ID-Informationen, die die erste Rauchersatzvorrichtung identifizieren, bestimmt werden kann, ob die erste Rauchersatzvorrichtung (10, 110) gültig für den Einsatz ist;
wobei die erste Rauchersatzvorrichtung (10, 110) dazu ausgelegt ist, ID-Informationen, die die erste Rauchersatzvorrichtung (10, 110) identifizieren, zu speichern;
wobei die erste Rauchersatzvorrichtung (10, 110), die Anwendung und der Anwendungsserver (4) dazu ausgelegt sind:
basierend auf den ID-Informationen, die die erste Rauchersatzvorrichtung (10, 110) identifizieren, und den der ersten Rauchersatzvorrichtung (10, 110) zugeordneten Gültigkeitsstatusinformationen zu bestimmen (S503, S514), ob die erste Rauchersatzvorrichtung (10, 110) für den Einsatz gültig ist; und
wenn bestimmt wird, dass die erste Rauchersatzvorrichtung (10, 110) nicht gültig für den Einsatz ist, ein Deaktivierungssignal auszugeben (S504, S515), das dazu ausgelegt ist, die erste Rauchersatzvorrichtung (10, 110) zu deaktivieren;
wobei das Deaktivierungssignal dazu ausgelegt ist, die erste Rauchersatzvorrichtung (10, 110) nichtpermanent zu deaktivieren, wenn die der ersten Rauchersatzvorrichtung (10, 110) zugeordneten Gültigkeitsstatusinformationen anzeigen, dass die Rauchersatzvorrichtung ungültig ist und nichtpermanent deaktiviert werden sollte;
wobei das Deaktivierungssignal dazu ausgelegt ist, die erste Rauchersatzvorrichtung (10, 110) permanent zu deaktivieren, wenn die der ersten Rauchersatzvorrichtung (10, 110) zugeordneten Gültigkeitsstatusinformationen anzeigen, dass die erste Rauchersatzvorrichtung ungültig ist und permanent deaktiviert werden sollte.

2. System nach Anspruch 1, wobei die der ersten Rauchersatzvorrichtung (10, 110) zugeordneten Gültigkeitsstatusinformationen eine oder mehrere Ungültigkeitsstatuszeichen umfasst, die dazu ausgelegt sind, einen Gültigkeitsstatus aufzuweisen; wobei ein erster Ungültigkeitsstatus anzeigt, dass die erste Rauchersatzvorrichtung ungültig ist und permanent deaktiviert werden sollte, und ein zweiter Ungültigkeitsstatus, der anzeigt, dass die erste Rauchersatzvorrichtung ungültig ist und nichtpermanent deaktiviert werden sollte, und wobei das Bestimmen (S503, S514), ob die erste Rauchersatzvorrichtung (10, 110) für den Einsatz gültig ist, das Verwenden der ID-Informationen umfasst, um zu überprüfen, ob die eine oder mehreren, der ersten Rauchersatzvorrichtung (10, 110) zugeordneten Ungültigkeitsstatuszeichen anzeigen, dass die erste Rauchersatzvorrichtung (10, 110) gültig ist, ungültig ist und permanent deaktiviert werden sollte, oder ungültig ist und nichtpermanent deaktiviert werden sollte.

3. System nach Anspruch 1 oder 2, wobei die der ersten Rauchersatzvorrichtung (10, 110) zugeordneten Gültigkeitsstatusinformationen der ersten Rauchersatzvorrichtung (10, 110) zugeordnet werden, indem sie in Zuordnung zu den ID-Informationen, die die erste Rauchersatzvorrichtung (10, 110) identifizieren, gespeichert werden.

4. System nach einem der vorangegangenen Ansprüche, wobei, wenn das Deaktivierungssignal dazu ausgelegt ist, die erste Rauchersatzvorrichtung (10, 110) nichtpermanent zu deaktivieren, die erste Rauchersatzvorrichtung (10, 110), die Anwendung und/oder der Anwendungsserver (4) dazu ausgelegt ist, ein Wiederaktivierungssignal auszugeben, das dazu ausgelegt ist, die erste Rauchersatzvorrichtung (10, 110) wieder zu aktivieren (S517), wenn ein oder mehrere Wiederaktivierungskriterien erfüllt sind.

5. System nach Anspruch 4, wobei das eine oder die mehreren Wiederaktivierungskriterien umfassen, dass ein Benutzer einen Verifizierungsprozess in der Anwendung besteht.

6. System nach Anspruch 4 oder 5, wobei das eine oder die mehreren Wiederaktivierungskriterien umfassen, dass die der ersten Rauchersatzvorrichtung im Anwendungsserver (4) zugeordneten Gültigkeitsstatusinformationen geändert werden, um anzuzeigen, dass die erste Rauchersatzvorrichtung (10, 110) gültig für den Einsatz ist.

7. System nach einem der vorangegangenen Ansprüche, wobei das permanente Deaktivieren der ersten Rauchersatzvorrichtung das Deaktivieren der ersten Rauchersatzvorrichtung derart beinhaltet, dass einem Benutzer der ersten Rauchersatzvorrichtung nicht erlaubt wird, die erste Rauchersatzvorrichtung wieder zu aktivieren, selbst wenn der Benutzer bewirkt, dass ein oder mehrere Wiederaktivierungskriterien erfüllt sind.

8. System nach einem der vorangegangenen Ansprüche, wobei die erste Rauchersatzvorrichtung (10, 110) dazu ausgelegt ist, mit der Anwendung drahtlos über einen Kommunikationskanal (8) zu kommunizieren, der direkt zwischen der ersten Rauchersatzvorrichtung (10, 110) und der Mobilvorrichtung (2), auf der die Anwendung installiert ist, eingerichtet ist.

9. System nach einem der vorangegangenen Ansprüche wobei:
das System eine oder mehrere weitere Rauchersatzvorrichtungen (10, 110) umfasst, die dazu ausgelegt sind, drahtlos mit der ersten Rauchersatzvorrichtung (10, 110) verbunden zu sein;
der Anwendungsserver (4) dazu ausgelegt ist, der ersten Rauchersatzvorrichtung (10, 110) zugeordnete Gültigkeitsstatusinformationen zu speichern;
die/jede weitere Rauchersatzvorrichtung (10, 110) dazu ausgelegt ist, ID-Informationen, die die weitere Rauchersatzvorrichtung (10, 110) identifizieren, zu speichern;
die erste Rauchersatzvorrichtung (10, 110), die Anwendung und der Anwendungsserver (4) dazu ausgelegt sind, für die/jede weitere Rauchersatzvorrichtung (10, 110) basierend auf den ID-Informationen, die die weitere Rauchersatzvorrichtung (10, 110) identifizieren, und den der weiteren Rauchersatzvorrichtung (10, 110) zugeordneten Gültigkeitsstatusinformationen zu bestimmen (S503, S514), ob die weitere Rauchersatzvorrichtung (10, 110) für den Einsatz gültig ist; und
wenn bestimmt wird, dass die weitere Rauchersatzvorrichtung (10, 110) nicht gültig für den Einsatz ist, ein Deaktivierungssignal (S504, S515) auszugeben, das dazu ausgelegt ist, die weitere Rauchersatzvorrichtung (10, 110) zu deaktivieren.

10. System nach Anspruch 9, wobei die/jede Rauchersatzvorrichtung dazu ausgelegt ist, ID-Informationen an die erste Rauchersatzvorrichtung zu senden, wobei die erste Rauchersatzvorrichtung (10, 110), die Anwendung und der Anwendungsserver (4) dazu ausgelegt sind, unter Verwendung der ID-Informationen, die von der/jeder weiteren Rauchersatzvorrichtung an die erste Rauchersatzvorrichtung gesendet wurden, die Gültigkeit der/jeden weiteren Rauchersatzvorrichtung zu bestimmen.

11. Verfahren, das durch ein System zum Verwalten einer Rauchersatzvorrichtung (10, 110) durchgeführt wird, wobei das System Folgendes umfasst:
eine erste Rauchersatzvorrichtung (10, 110);
eine Mobilvorrichtung (2), auf der eine Anwendung installiert ist, wobei die erste Rauchersatzvorrichtung (10, 110) dazu ausgelegt ist, mit der Anwendung zu kommunizieren;
einen Anwendungsserver (4), wobei die Mobilvorrichtung (2) dazu ausgelegt ist, mit dem Anwendungsserver (4) zu kommunizieren, und wobei der Anwendungsserver (4) dazu ausgelegt ist, der ersten Rauchersatzvorrichtung (10, 110) zugeordnete Gültigkeitsstatusinformationen zu speichern, anhand derer bestimmt werden kann, ob die erste Rauchersatzvorrichtung (10, 110) gültig für den Einsatz ist;
wobei die erste Rauchersatzvorrichtung (10, 110) dazu ausgelegt ist, ID-Informationen, die die erste Rauchersatzvorrichtung (10, 110) identifizieren, zu speichern;
wobei das Verfahren Folgendes umfasst:
Bestimmen (S504, S514) durch die erste Rauchersatzvorrichtung (10, 110), die Anwendung und den Anwendungsserver (4), ob die erste Rauchersatzvorrichtung (10, 110) für den Einsatz gültig ist, basierend auf den ID-Informationen, die die erste Rauchersatzvorrichtung (10, 110) identifizieren, und den der ersten Rauchersatzvorrichtung (10, 110) zugeordneten Gültigkeitsstatusinformationen; und
wenn bestimmt wird, dass die erste Rauchersatzvorrichtung (10, 110) nicht gültig für den Einsatz ist, Ausgeben eines Deaktivierungssignals (S504, S515), das dazu ausgelegt ist, die erste Rauchersatzvorrichtung (10, 110) zu deaktivieren;
wobei das Deaktivierungssignal die erste Rauchersatzvorrichtung (10, 110) nichtpermanent deaktiviert, wenn die der ersten Rauchersatzvorrichtung (10, 110) zugeordneten Gültigkeitsstatusinformationen anzeigen, dass die Rauchersatzvorrichtung ungültig ist und nichtpermanent deaktiviert werden sollte;
wobei das Deaktivierungssignal die erste Rauchersatzvorrichtung (10, 110) permanent deaktiviert, wenn die der ersten Rauchersatzvorrichtung (10, 110) zugeordneten Gültigkeitsstatusinformationen anzeigen, dass die erste Rauchersatzvorrichtung ungültig ist und permanent deaktiviert werden sollte.

## Revendications

1. Système de gestion d'un dispositif à fumer de substitution (10, 110) incluant :
un premier dispositif à fumer de substitution (10, 110) ;
un dispositif mobile (2) sur lequel une application est installée, dans lequel le premier dispositif à fumer de substitution (110) est configuré pour communiquer avec l'application ;
le système comprend un serveur d'application (4), dans lequel le dispositif mobile (2) est configuré pour communiquer avec le serveur d'application (4), et dans lequel le serveur d'application (4) est configuré pour stocker des informations d'état de validité associées au premier dispositif à fumer de substitution (10, 110) à partir desquelles il est possible de déterminer, à l'aide d'informations d'identification identifiant le premier dispositif à fumer de substitution, si le premier dispositif à fumer de substitution (10, 110) est valide ou non pour une utilisation ;
dans lequel le premier dispositif à fumer de substitution (10, 110) est configuré pour stocker des informations d'identification identifiant le premier dispositif à fumer de substitution (10, 110) ;
dans lequel le premier dispositif à fumer de substitution (10, 110), l'application et le serveur d'application (4) sont configurés pour :
déterminer (S503, S514) si le premier dispositif à fumer de substitution (10, 110) est valide ou non pour une utilisation sur la base des informations d'identification identifiant le premier dispositif à fumer de substitution (10, 110) et des informations d'état de validité associées au premier dispositif à fumer de substitution (10, 110) ; et
si le premier dispositif à fumer de substitution (10, 110) est déterminé comme n'étant pas valide pour une utilisation, émettre un signal de désactivation (S504, S515) configuré pour désactiver le premier dispositif à fumer de substitution (10, 110) ;
dans lequel le signal de désactivation est configuré pour désactiver le premier dispositif à fumer de substitution (10, 110) de manière non permanente, si les informations d'état de validité associées au premier dispositif à fumer de substitution (10, 110) indiquent que le dispositif à fumer de substitution est invalide et doit être désactivé de manière non permanente ;
dans lequel le signal de désactivation est configuré pour désactiver le premier dispositif à fumer de substitution (10, 110) de manière permanente, si les informations d'état de validité associées au premier dispositif à fumer de substitution (10, 110) indiquent que le premier dispositif à fumer de substitution est invalide et doit être désactivé de manière permanente.

2. Système selon la revendication 1, dans lequel les informations d'état de validité associées au premier dispositif à fumer de substitution (10, 110) comprennent un ou plusieurs drapeaux d'invalidité configurés pour présenter un état valide, un premier état invalide indiquant que le premier dispositif à fumer de substitution est invalide et doit être désactivé de manière permanente, et un second état invalide indiquant que le premier dispositif à fumer de substitution est invalide et doit être désactivé de manière non permanente, et dans lequel la détermination (S503, S514) de la validité ou non pour une utilisation du premier dispositif à fumer de substitution (10, 110) comprend l'utilisation des informations d'identification pour vérifier si les un ou plusieurs drapeaux d'invalidité associés au premier dispositif à fumer de substitution (10, 110) indiquent que le premier dispositif à fumer de substitution (10, 110) est valide, invalide et doit être désactivé de manière permanente, ou invalide et doit être désactivé de manière non permanente.

3. Système selon la revendication 1 ou 2, dans lequel les informations d'état de validité associées au premier dispositif à fumer de substitution (10, 110) sont associées au premier dispositif à fumer de substitution (10, 110) en étant stockées en association avec les informations d'identification identifiant le premier dispositif à fumer de substitution (10, 110).

4. Système selon l'une quelconque des revendications précédentes, dans lequel si le signal de désactivation est configuré pour désactiver le premier dispositif à fumer de substitution (10, 110) de manière non permanente, le premier dispositif à fumer de substitution (10, 110), l'application et/ou le serveur d'application (4) est configuré(e) pour émettre un signal de réactivation configuré pour réactiver (S517) le premier dispositif à fumer de substitution (10, 110) si un ou plusieurs critères de réactivation sont satisfaits.

5. Système selon la revendication 4, dans lequel les un ou plusieurs critères de réactivation comprennent un utilisateur passant un processus de vérification dans l'application.

6. Système selon la revendication 4 ou 5, dans lequel les un ou plusieurs critères de réactivation comprennent les informations d'état de validité associées au premier dispositif à fumer de substitution au niveau du serveur d'application (4) qui sont modifiées pour indiquer que le premier dispositif à fumer de substitution (10, 110) est valide pour une utilisation.

7. Système selon l'une quelconque des revendications précédentes, dans lequel la désactivation permanente du premier dispositif à fumer de substitution implique une désactivation du premier dispositif à fumer de substitution de telle sorte qu'un utilisateur du premier dispositif à fumer de substitution ne soit pas autorisé à réactiver le premier dispositif à fumer de substitution, même si l'utilisateur fait en sorte qu'un ou plusieurs critères de réactivation soient satisfaits.

8. Système selon l'une quelconque des revendications précédentes, dans lequel le premier dispositif à fumer de substitution (10, 110) est configuré pour communiquer sans fil avec l'application via un canal de communication (8) établi directement entre le premier dispositif à fumer de substitution (10, 110) et le dispositif mobile (2) sur lequel l'application est installée.

9. Système selon l'une quelconque des revendications précédentes, dans lequel :
le système comprend un ou plusieurs dispositifs à fumer de substitution supplémentaires (10, 110) configurés pour être connectés sans fil au premier dispositif à fumer de substitution (10, 110) ;
le serveur d'application (4) est configuré pour stocker des informations d'état de validité associées au/à chaque dispositif à fumer de substitution supplémentaire (10, 110) ;
le/chaque dispositif à fumer de substitution supplémentaire (10, 110) est configuré pour stocker des informations d'identification identifiant le dispositif à fumer de substitution supplémentaire (10, 110) ;
pour le/chaque dispositif à fumer de substitution supplémentaire (10, 110), le premier dispositif à fumer de substitution (10, 110), l'application et le serveur d'application (4) sont configurés pour déterminer (S503, S514) si le dispositif à fumer de substitution supplémentaire (10, 110) est valide ou non pour une utilisation, et sur la base des informations d'identification identifiant le dispositif à fumer de substitution supplémentaire (10, 110) et des informations d'état de validité associées au dispositif à fumer de substitution supplémentaire (10, 110) ; et
si le dispositif à fumer de substitution supplémentaire (10, 110) est déterminé comme n'étant pas valide pour une utilisation, émettre un signal de désactivation (S504, S515) configuré pour désactiver le dispositif à fumer de substitution supplémentaire (10, 110).

10. Système selon la revendication 9, dans lequel le/chaque dispositif à fumer de substitution supplémentaire est configuré pour envoyer des informations d'identification au premier dispositif à fumer de substitution, dans lequel le premier dispositif à fumer de substitution (10, 110), l'application et le serveur d'application (4) sont configurés pour déterminer la validité du/de chaque dispositif à fumer de substitution supplémentaire en utilisant les informations d'identification envoyées au premier dispositif à fumer de substitution par le/chaque dispositif à fumer de substitution supplémentaire.

11. Procédé exécuté par un système de gestion d'un dispositif à fumer de substitution (10, 110), dans lequel le système comprend :
un premier dispositif à fumer de substitution (10, 110) ;
un dispositif mobile (2) sur lequel une application est installée, dans lequel le premier dispositif à fumer de substitution (110) est configuré pour communiquer avec l'application ;
un serveur d'application (4), dans lequel le dispositif mobile (2) est configuré pour communiquer avec le serveur d'application (4), et dans lequel le serveur d'application (4) est configuré pour stocker des informations d'état de validité associées au premier dispositif à fumer de substitution (10, 110) à partir desquelles il est possible de déterminer si le premier dispositif à fumer de substitution (10, 110) est valide ou non pour une utilisation ;
dans lequel le premier dispositif à fumer de substitution (10, 110) est configuré pour stocker des informations d'identification identifiant le premier dispositif à fumer de substitution (10, 110) ;
dans lequel le procédé inclut :
le premier dispositif à fumer de substitution (10, 110), l'application et le serveur d'application (4) déterminant (S504, S514) si le premier dispositif à fumer de substitution (10, 110) est valide ou non pour une utilisation sur la base des informations d'identification identifiant le premier dispositif à fumer de substitution (10, 110) et des informations d'état de validité associées au premier dispositif à fumer de substitution (10, 110) ; et
si le premier dispositif à fumer de substitution (10, 110) est déterminé comme n'étant pas valide pour une utilisation, émettre un signal de désactivation (S504, S515) configuré pour désactiver le premier dispositif à fumer de substitution (10, 110) ;
dans lequel le signal de désactivation désactive le premier dispositif à fumer de substitution (10, 110) de manière non permanente, si les informations d'état de validité associées au premier dispositif à fumer de substitution (10, 110) indiquent que le dispositif à fumer de substitution est invalide et doit être désactivé de manière non permanente ;
dans lequel le signal de désactivation désactive le premier dispositif à fumer de substitution (10, 110) de manière permanente, si les informations d'état de validité associées au premier dispositif à fumer de substitution (10, 110) indiquent que le premier dispositif à fumer de substitution est invalide et doit être désactivé de manière permanente.
